(19) **Europäisches Patentamt / European Patent Office / Office européen des brevets**

(11) **EP 2 971 327 B1**

(12) **FASCICULE DE BREVET EUROPEEN**

(45) Date de publication et mention de la délivrance du brevet:
**25.04.2018 Bulletin 2018/17**

(21) Numéro de dépôt: **14715045.2**

(22) Date de dépôt: **07.03.2014**

(51) Int Cl.:
*D06M 15/263* (2006.01)  *C03C 25/24* (2018.01)
*C03C 25/28* (2018.01)  *C08L 33/12* (2006.01)

(86) Numéro de dépôt international:
**PCT/FR2014/050532**

(87) Numéro de publication internationale:
**WO 2014/135816 (12.09.2014 Gazette 2014/37)**

(54) **SIROP (METH) ACRYLIQUE LIQUIDE D'IMPREGNATION D'UN SUBSTRAT FIBREUX, PROCEDE D'IMPREGNATION D'UN SUBSTRAT FIBREUX, MATERIAU COMPOSITE OBTENU APRES POLYMERISATION DUDIT SUBSTRAT PRE-IMPREGNE**

FLÜSSIG(METH)ACRYLSIRUP ZUM IMPRÄGNIEREN EINES FASERSUBSTRATS, VERFAHREN ZUM IMPRÄGNIEREN EINES FASERSUBSTRATS UND NACH DER POLYMERISATION DIESES VORIMPRÄGNIERTEN SUBSTRATS HERGESTELLTER VERBUNDWERKSTOFF

LIQUID (METH)ACRYLIC SYRUP FOR IMPREGNATING A FIBROUS SUBSTRATE, METHOD FOR IMPREGNATING A FIBROUS SUBSTRATE, AND COMPOSITE MATERIAL PRODUCED AFTER POLYMERISATION OF SAID PRE-IMPREGNATED SUBSTRATE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.03.2013 FR 1352119**

(43) Date de publication de la demande:
**20.01.2016 Bulletin 2016/03**

(73) Titulaire: **Arkema France**
**92700 Colombes (FR)**

(72) Inventeur: **GERARD, Pierre**
**F-64230 Denguin (FR)**

(56) Documents cités:
**EP-A1- 2 502 956    JP-A- 2000 119 421**
**US-A- 4 344 906**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 971 327 B1

# Description

## [Domaine de l'invention]

La présente invention concerne un sirop (méth)acrylique liquide d'imprégnation d'un substrat fibreux.

Plus particulièrement, l'invention concerne un sirop liquide (méth)acrylique visqueux contenant principalement des composants méthacryliques ou acryliques et des charges organiques ou minérales destinées à réduire la proportion de monomère résiduel suite à la polymérisation du sirop (méth)acrylique. L'invention concerne en outre un procédé d'imprégnation d'un substrat fibreux ou de fibres longues avec ledit sirop liquide visqueux. L'invention concerne également un substrat fibreux pré-imprégné avec ledit sirop qui est utile pour la fabrication de pièces composites.

La présente invention concerne également un procédé de fabrication de pièces composites et des pièces composites obtenues par ce procédé.

## [Art antérieur]

Les pièces mécaniques qui doivent tenir des contraintes élevées pendant leur utilisation, sont largement fabriquées à partir de matériaux composites. Un matériau composite est une combinaison macroscopique de deux matériaux non miscibles ou plus. Le matériau composite est constitué par au moins un matériau qui forme la matrice, c'est-à-dire une phase continue assurant la cohésion de la structure, et un matériau de renfort.

L'objectif, lors de l'utilisation d'un matériau composite, est d'obtenir des performances qui ne sont pas disponibles avec chacun de ses constituants lorsqu'ils sont utilisés séparément. Par conséquent, des matériaux composites sont largement utilisés dans plusieurs secteurs industriels tels que par exemple la construction, l'automobile, l'aérospatial, les transports, les loisirs, l'électronique et le sport, le bâtiment, notamment en raison de leurs meilleures performances mécaniques (résistance à la traction supérieure, module de traction supérieur, ténacité à la rupture supérieure) et de leur faible densité, en comparaison des matériaux homogènes.

La classe la plus importante, au regard du volume à l'échelle industrielle commerciale, est celle des composites à matrices organiques, dans lesquels le matériau de matrice est généralement un polymère. La matrice d'un matériau composite polymère est soit un polymère thermoplastique, soit un polymère thermodurcissable.

Les polymères thermodurcissables consistent en des structures tridimensionnelles réticulées. La réticulation est obtenue par cuisson de groupes réactifs dans un pré-polymère. La cuisson peut par exemple être obtenue par chauffage des chaînes polymères afin de réticuler et de durcir le matériau de manière permanente.

Afin de préparer le matériau composite polymère, un pré-polymère est mélangé avec l'autre composant, tel que des billes ou fibres de verre, ou l'autre composant est mouillé ou imprégné et cuit ultérieurement. Des exemples de prépolymères ou de matériau de matrice pour polymères thermodurcissables sont les polyesters insaturés, les esters de vinyle, les matériaux époxy ou phénoliques.

Un inconvénient majeur d'une matrice polymère thermodurcissable est sa réticulation. La matrice ne peut pas facilement être façonnée en d'autres formes. Une fois le polymère réticulé, la forme est fixée. Ceci rend également difficile le recyclage du matériau composite thermodurcissable et des pièces ou articles mécaniques ou structurés fabriqués comprenant ledit matériau composite thermodurcissable, qui sont brûlés dans une cimenterie ou jetés dans une décharge. Un autre inconvénient majeur de l'ensemble des matrices thermodurcissables sont leur fragilité.

Pour permettre le thermoformage et le recyclage, on préfère utiliser les polymères thermoplastiques.

Les polymères thermoplastiques consistent en des polymères linéaires ou ramifiés qui ne sont pas réticulés. Les polymères thermoplastiques sont chauffés afin de mélanger les constituants nécessaires pour la fabrication du matériau composite et sont refroidis pour figer la forme finale. Le problème de ces polymères thermoplastiques fondus est leur viscosité très importante. Afin de préparer un matériau composite polymère à base de polymère thermoplastique, une résine polymère thermoplastique, communément appelée « sirop », est utilisée pour imprégner le matériau de renfort, par exemple un substrat fibreux. Une fois polymérisé, le sirop polymère thermoplastique constitue la matrice du matériau composite. Au moment de l'imprégnation, la viscosité du sirop d'imprégnation doit être maitrisée et adaptée pour ne pas être trop fluide ou trop visqueuse, de manière à imprégner correctement chaque fibre du substrat fibreux. Lorsque le mouillage est partiel, selon que le sirop est trop fluide ou trop visqueux, il apparait respectivement des zones « à nu », c'est-à-dire non imprégnées, et des zones où il se forme des gouttes de polymère sur les fibres qui sont à l'origine de la création de bulles. Ces zones « à nu » et ces bulles engendrent l'apparition de défauts dans le matériau composite final qui sont à l'origine, entre autre, d'une perte de résistance mécanique du matériau composite final. Un sirop répondant à ce problème a été mis au point par la Demanderesse et est décrit dans les demandes de brevet FR N° FR1159553 ou son extension PCT WO2013/056845 et dans la demande de brevet N° FR1256929 ou son extension PCT WO2014/013028. JP2000 119421 divulgue des liquides d'imprégnation d'un substrat fibreux, ledit liquide comprenant un copolymère acrylique, un monomère acrylique, des particules gonflantes de polyméthylméthacrylate réticulé et des charges minérales.

La Demanderesse a donc développé un sirop (meth)acrylique d'imprégnation d'un substrat fibreux, afin de réaliser des pièces en matériau composite thermoplastique (meth)acrylique. La Demanderesse a constaté qu'un sirop à base uniquement de monomère (meth) acrylique est trop fluide. Elle a donc réalisé un sirop en mélangeant au monomère (meth)acrylique, un polymère (meth)acrylique afin d'augmenter la viscosité du sirop et d'arriver à l'obtention d'un sirop d'une viscosité optimale pour l'imprégnation des fibres du substrat fibreux.

Cependant, la Demanderesse a constaté que la composition du sirop pouvait encore être améliorée. En effet, lors de la polymérisation du sirop (meth)acrylique imprégnant le substrat fibreux, pour la réalisation de pièces composites, le sirop (méth)acrylique comprend entre 70 et 90% de monomère (meth)acrylique à convertir en polymère. Or, la polymérisation étant une polymérisation radicalaire, elle engendre un pic exothermique. Ce pic est d'autant plus important qu'il y a de monomère à convertir. Or, une augmentation trop importante de la température au moment de la polymérisation peut entraîner des problèmes, et notamment l'apparition de défauts de surface dans le matériau composite final. De plus, plus il y a de monomère à convertir et plus il y a de risques d'y avoir de monomère résiduel en fin de polymérisation. La présence de monomère (meth)acrylique résiduel pose des problèmes d'hygiène et de sécurité du fait de son inflammabilité et de sa toxicité. C'est notamment un allergène puissant.

Enfin, la densité du monomère (meth)acrylique est inférieure à celle du polymère (méth)acrylique. Cette différence de densité entraîne, lors de la polymérisation, l'apparition d'un phénomène de retrait. Il faut par conséquent tenir compte de ce phénomène de retrait dans le design du moule.

Pour réduire le taux de monomère (meth) acrylique dans le sirop, la Demanderesse est en outre confrontée au problème qu'il faut maintenir la viscosité du sirop à une valeur optimale pour obtenir une imprégnation correcte du substrat fibreux. Or, on ne peut pas réduire le taux de monomère (meth)acrylique dans le sirop (meth)acrylique sans modifier la viscosité puisque celle-ci dépend de la concentration en polymère et de la masse moléculaire moyenne en poids du polymère. Augmenter le taux de polymère (meth)acrylique dans le sirop (meth)acrylique sans diminuer la masse moléculaire moyenne en poids revient donc à augmenter la viscosité du sirop, ce qui n'est pas envisageable car, dans ce cas, l'imprégnation du substrat fibreux n'est pas correcte. Réduire la masse moléculaire moyenne en poids, c'est-à-dire réduire la longueur des chaines polymères pour pouvoir augmenter le taux de polymère (meth)acrylique dans le sirop (meth)acrylique ne peut pas non plus être envisagé car une diminution de la masse moléculaire en poids implique une diminution des propriétés mécaniques du composite final, notamment une fragilité plus importante, caractérisée par une diminution des contraintes à la rupture.

**[PROBLEME TECHNIQUE]**

L'invention a donc pour but de remédier à au moins un des inconvénients précités.

L'invention vise notamment à proposer un sirop (meth)acrylique destiné à imprégner un substrat fibreux puis à être polymérisé, le sirop présentant une composition telle qu'elle permet de réduire de manière significative le pic exothermique engendré par la polymérisation, ainsi que le taux de monomère résiduel en fin de polymérisation et le phénomène de retrait.

L'invention vise aussi à proposer une pièce en matériau composite thermoplastique dont la matrice thermoplastique obtenue après polymérisation du sirop ne présente pas ou peu de défaut.

L'invention vise en outre à mouiller complètement, correctement et de manière homogène le substrat fibreux pendant l'imprégnation. Tout défaut du mouillage des fibres par exemple par des bulles et des vides diminue les performances mécaniques de la pièce composite finale.

Un autre objectif de la présente invention est de proposer un procédé qui peut être réalisé à faible coût et qui permet une fabrication, à l'échelle industrielle, de pièces mécaniques ou éléments structurels en matériau composite thermoplastique. Par ailleurs, le procédé doit être facile et simple à mettre en oeuvre en utilisant des composés disponibles dans le commerce. La fabrication des pièces composites doit également être reproductible et rapide, ce qui signifie des temps de cycle courts.

**[BREVE DESCRIPTION DE L'INVENTION]**

De manière surprenante, il a été découvert qu'un sirop (meth)acrylique liquide d'imprégnation d'un substrat fibreux, ledit substrat fibreux étant constitué de fibres longues, ledit sirop étant caractérisé en ce qu'il comprend :

a) un polymère (méth)acrylique,
b) un monomère (méth)acrylique,
c) des charges choisies parmi des particules présentant un taux de gonflement dans le monomère (meth)acrylique inférieur à 200 %, de préférence inférieur à 150 % et avantageusement inférieur à 120 % et un diamètre moyen $D_{50}$ inférieur à 50 $\mu$m, de préférence inférieur à 20 $\mu$m, et avantageusement inférieur à 5 $\mu$m,

ledit sirop (méth)acrylique liquide ayant une viscosité dynamique comprise entre 10 mPa*s et 10 000 mPa*s, de préférence entre 50 mPa*s et 5 000 mPa*s et avantageusement entre 100 mPa*s et 1 000 mPa*s, fournit une imprégnation complète et correcte du substrat fibreux tout en ayant, dans sa composition, un taux réduit de monomère si bien que la polymérisation est presque complète, c'est-à-dire que le taux monomère résiduel en fin de polymérisation est significativement réduit. De plus, du fait de ce taux réduit de monomère dans la composition du sirop, la température du pic exothermique lors de la polymérisation du sirop est significativement abaissée.

De manière surprenante, il a été découvert également que lorsque les charges sont choisies parmi au moins une des charges suivantes:

- des billes de PMMA réticulées avec un agent de réticulation présent dans des proportions supérieures à 0,5 %, de préférence supérieures à 1 % et avantageusement supérieures à 2 % en poids des billes de PMMA, lesdites billes de PMMA réticulées présentant un taux de gonflement dans le monomère (meth)acrylique inférieur à 200 %, de préférence inférieur à 150 % et avantageusement inférieur à 120 % , et un diamètre moyen $D_{50}$ inférieur à 50 $\mu$m, de préférence inférieur à 20 $\mu$m, et avantageusement inférieur à 5 $\mu$m,
- des billes de verres creuses dont le diamètre moyen $D_{50}$ est inférieur à 50 $\mu$m, de préférence inférieur à 20 $\mu$m, et avantageusement inférieur à 5 $\mu$m,

le sirop (méth)acrylique fournit une imprégnation complète et correcte du substrat fibreux tout en ayant, dans sa composition, un taux réduit de monomère si bien que la polymérisation est presque complète, c'est-à-dire que le taux monomère résiduel en fin de polymérisation est significativement réduit. De plus, du fait de ce taux réduit de monomère dans la composition du sirop, la température du pic exothermique lors de la polymérisation du sirop est significativement abaissée.

De manière surprenante, la Demanderesse a également découvert qu'un procédé d'imprégnation pour l'imprégnation d'un substrat fibreux, ledit substrat fibreux étant constitué de fibres longues et ledit procédé comprenant une étape d'imprégnation dudit substrat fibreux avec ledit sirop (méth)acrylique liquide d'imprégnation, fournit une imprégnation complète et correcte du substrat fibreux.

Étonnamment, il a en outre été découvert qu'un procédé de fabrication de pièces composites comprenant les étapes suivantes :

a) l'imprégnation d'un substrat fibreux avec un tel sirop (méth)acrylique liquide,
b) la polymérisation du sirop (méth)acrylique liquide imprégnant ledit substrat fibreux,

permet d'obtenir des pièces composites thermoplastiques présentant de bonnes propriétés mécaniques et presque pas de défauts. De plus, au moment de la polymérisation, la température du pic exothermique est abaissée de manière significative et le phénomène de retrait de la matrice thermoplastique devient imperceptible.

**[DESCRIPTION DETAILLEE]**

Le terme « substrat fibreux » tel qu'utilisé se rapporte à des tissus, des feutres ou des non-tissés qui peuvent être sous la forme de bandes, de nappes, de tresses, de mèches ou de pièces.

Le terme « (méth)acrylique » tel qu'utilisé se rapporte à tout type de monomères acryliques et méthacryliques.

Le terme « PMMA » tel qu'utilisé se rapporte aux homo- et copolymères de méthacrylate de méthyle (MMA), le rapport en poids de MMA dans le PMMA étant d'au moins 70 % en poids pour le copolymère de MMA.

Le terme « monomère » tel qu'utilisé se rapporte à une molécule qui peut subir une polymérisation.

Le terme « polymérisation tel qu'utilisé se rapporte au procédé de transformation d'un monomère ou d'un mélange de monomères en un polymère.

Le terme « polymère thermoplastique » tel qu'utilisé se rapporte à un polymère qui se transforme en un liquide ou devient plus liquide ou moins visqueux lorsqu'il est chauffé et qui peut prendre de nouvelles formes par l'application de chaleur et de pression.

Le terme « polymère thermodurcissable » tel qu'utilisé se rapporte à un prépolymère à un état souple, solide ou visqueux qui se transforme de manière irréversible en un réseau polymère insoluble et infusible par cuisson.

Le terme « composite polymère » tel qu'utilisé se rapporte à un matériau multicomposant comprenant plusieurs domaines de phase différents, parmi lesquels au moins un type de domaine de phase est une phase continue et dans lequel au moins un composant est un polymère.

Le terme « taux de gonflement » tel qu'utilisé dans la présente invention se rapporte à la capacité d'une particule plongée dans un composé à changer de volume. Un taux de gonflement égal à 100% signifie que la particule reste inchangée. Un taux de gonflement supérieur à 100% est révélateur d'une expansion volumique de la particule et un taux de gonflement inférieur à 100% est révélateur d'une contraction volumique de la particule. Un taux du gonflement de 200% signifie que la particule a doublé son volume d'un facteur 2, ce qui correspond à une augmentation de diamètre de la particule d'un facteur $\sqrt[3]{2}$. Un du gonflement de 150% signifie que la particule a augmenté son volume d'un facteur 1.5, ce qui correspond à une augmentation de diamètre de la particule d'un facteur $\sqrt[3]{1.5}$.

Concernant la pièce en matériau composite, il s'agit d'un panneau, d'un couvercle ou d'une coque constitué d'un matériau composite ou de pièces pour avions, pour bateaux (coque et pont), véhicules de chemin de fer (trappe, cloison, caisse) et de pièces automobiles (carrosserie, capot, porte).

Selon un premier aspect, la présente invention concerne un sirop (méth)acrylique liquide d'imprégnation d'un substrat fibreux, ledit substrat fibreux étant constitué de fibres longues et ledit sirop étant caractérisé en ce qu'il comprend :

a) un polymère (méth)acrylique,
b) un monomère (méth)acrylique,
c) des charges choisies parmi des particules présentant un taux de gonflement dans le monomère (meth)acrylique inférieur à 200 %, de préférence inférieur à 150 % et avantageusement inférieur à 120 % et un diamètre moyen $D_{50}$ inférieur à 50 $\mu$m, de préférence inférieur à 20 $\mu$m, et avantageusement inférieur à 5 $\mu$m,

ledit sirop (méth)acrylique liquide ayant une viscosité dynamique comprise entre 10 mPa*s et 10 000 mPa*s, de préférence entre 50 mPa*s et 5 000 mPa*s et avantageusement entre 100 mPa*s et 1 000 mPa*s.

Selon un autre aspect, les charges sont choisies parmi au moins une des charges suivantes :

- des billes de PMMA réticulées avec un agent de réticulation présent dans des proportions supérieures à 0,5 %, de préférence supérieures à 1 % et avantageusement supérieures à 2 % en poids des billes de PMMA, lesdites billes de PMMA réticulées présentant un taux de gonflement dans le monomère (meth)acrylique inférieur à 200 %, de préférence inférieur à 150 % et avantageusement inférieur à 120 % , et un diamètre moyen $D_{50}$ inférieur à 50 $\mu$m, de préférence inférieur à 20 $\mu$m, et avantageusement inférieur à 5 $\mu$m,
- des billes de verres creuses dont le diamètre moyen $D_{50}$ est inférieur à 50 $\mu$m, de préférence inférieur à 20 $\mu$m, et avantageusement inférieur à 5 $\mu$m.

**En ce qui concerne le monomère (méth) acrylique,** le monomère est choisi parmi l'acide acrylique, l'acide méthacrylique, les monomères acryliques d'alkyle, les monomères méthacryliques d'alkyle et leurs mélanges.

De préférence, le monomère est choisi parmi l'acide acrylique, l'acide méthacrylique, les monomères acryliques d'alkyle, les monomères méthacryliques d'alkyle et leurs mélanges, le groupe alkyle contenant de 1 à 22 carbones, linéaires, ramifiés ou cycliques ; le groupe alkyle contenant de préférence 1 à 12 carbones, linéaires, ramifiés ou cycliques.

Avantageusement, le monomère (méth)acrylique est choisi parmi le méthacrylate de méthyle, le méthacrylate d'éthyle, l'acrylate de méthyle, l'acrylate d'éthyle, l'acide méthacrylique, l'acide acrylique, l'acrylate de n-butyle, l'acrylate d'isobutyle, le méthacrylate de n-butyle, le méthacrylate d'isobutyle, l'acrylate de cyclohexyle, le méthacrylate de cyclohexyle, l'acrylate d'isobornyle, le méthacrylate d'isobornyle et leurs mélanges.

Plus avantageusement, le monomère (méth)acrylique est choisi parmi le méthacrylate de méthyle, l'acrylate d'isobornyle ou l'acide acrylique et leurs mélanges.

Selon un mode de réalisation préféré, au moins 50 % en poids, de préférence au moins 60 % en poids du monomère est le méthacrylate de méthyle.

Selon un mode de réalisation davantage préféré, au moins 50 % en poids, de préférence au moins 60 % en poids, de manière davantage préférée au moins 70 % en poids et avantageusement au moins 80 % en poids et encore plus avantageusement 90 % en poids du monomère est un mélange de méthacrylate de méthyle avec de l'acrylate d'isobornyle et/ou de l'acide acrylique.

**En ce qui concerne le polymère (méth) acrylique,** on peut mentionner les polyméthacrylates d'alkyle ou les polyacrylates d'alkyle. Selon un mode de réalisation préféré, le polymère (méth)acrylique est le polyméthacrylate de méthyle (PMMA).

Le terme « PMMA » désigne un homopolymère ou copolymère de méthacrylate de méthyle (MMA) ou leurs mélanges.

Selon un mode de réalisation, l'homo- ou le copolymère de méthacrylate de méthyle (MMA) comprend au moins 70 %, de préférence au moins 80 %, avantageusement au moins 90 % et plus avantageusement au moins 95 % en poids de méthacrylate de méthyle.

Selon un autre mode de réalisation, le PMMA est un mélange d'au moins un homopolymère et d'au moins un copolymère de MMA, ou un mélange d'au moins deux homopolymères ou deux copolymères de MMA ayant un poids moléculaire moyen différent, ou un mélange d'au moins deux copolymères de MMA ayant une composition de monomères différente.

Le copolymère de méthacrylate de méthyle (MMA) comprend de 70 % à 99,7 % en poids de méthacrylate de méthyle et de 0,3 à 30 % en poids d'au moins un monomère contenant au moins une insaturation éthylénique qui peut copolymériser avec le méthacrylate de méthyle.

Ces monomères sont bien connus et on peut notamment mentionner les acides acrylique et méthacrylique et les (méth)acrylates d'alkyle dans lesquels le groupe alkyle contient de 1 à 12 atomes de carbone. À titre d'exemple, on peut mentionner l'acrylate de méthyle et le (méth)acrylate d'éthyle, de butyle ou de 2-éthylhexyle. De préférence, le comonomère est un acrylate d'alkyle dans lequel le groupe alkyle contient de 1 à 4 atomes de carbone.

Selon un mode de réalisation préféré, le copolymère de méthacrylate de méthyle (MMA) comprend de 80 % à 99,7 %, avantageusement de 90 % à 99,7 % et plus avantageusement de 90 % à 99,5 % en poids de méthacrylate de méthyle et de 0,3 % à 20 %, avantageusement de 0,3 % à 10 % et plus avantageusement de 0,5 % à 10 % en poids d'au moins un monomère contenant au moins une insaturation éthylénique qui peut copolymériser avec le méthacrylate de méthyle. De préférence, le comonomère est choisi parmi l'acrylate de méthyle ou l'acrylate d'éthyle ou leurs mélanges.

La masse moléculaire moyenne en poids du polymère (méth)acrylique doit être élevée, ce qui signifie supérieure à 50 000 g/mol, de préférence supérieure à 100 000 g/mol.

La masse moléculaire moyenne en poids peut être mesurée par chromatographie d'exclusion stérique (SEC en anglais).

Le polymère (méth)acrylique est complètement soluble dans le monomère (méth)acrylique ou dans le mélange de monomères (méth)acryliques. Il permet d'augmenter la viscosité du monomère (méth)acrylique ou du mélange de monomères (méth)acryliques. La solution obtenue est généralement nommée « sirop » ou « prépolymère ». La valeur de la viscosité dynamique du sirop (méth)acrylique liquide est comprise entre de 10 mPa*s et 10 000 mPa*s, de préférence entre 50 mPa*s et 5 000 mPa*s et avantageusement entre 100 mPa*s et 1 000 mPa*s. La viscosité du sirop peut facilement être mesurée avec un rhéomètre ou un viscosimètre. La viscosité dynamique est mesurée à 25°C. Le sirop (méth)acrylique liquide a un comportement newtonien, ce qui signifie qu'il n'y a pas de dilution sous cisaillement, de sorte que la viscosité dynamique est indépendante du cisaillement dans un rhéomètre ou de la vitesse du mobile dans un viscosimètre. Une telle viscosité du sirop obtenu permet une imprégnation correcte des fibres du substrat fibreux.

Avantageusement, le sirop (méth)acrylique liquide ne contient pas de solvant ajouté volontairement supplémentaire.

**En ce qui concerne les charges,** leur incorporation dans le sirop (meth)acrylique permet de réduire le taux de monomère (méth)acrylique dans le sirop (meth)acrylique.

Pour obtenir un sirop (méth)acrylique avec une viscosité optimale pour l'imprégnation des fibres du substrat fibreux, c'est-à-dire une viscosité comprise entre 10 mPa*s et 10 000 mPa*s, de préférence entre 50 mPa*s et 5 000 mPa*s et avantageusement entre 100 mPa*s et 1 000 mPa*s, il faut un rapport en polymère / monomère compris entre 10 et 30 % ainsi qu'une masse moléculaire moyenne en poids du polymère (méth)acrylique qui doit être élevée, c'est-à-dire supérieure à 50000g/mol, de préférence supérieure à 100000g/mol.

Le poids moléculaire pondéral moyen peut être mesuré par chromatographie d'exclusion de taille (SEC - size exclusion chromatography).

Une incorporation de particules de PMMA réticulées dans le sirop (meth)acrylique permet d'augmenter la concentration en polymère (meth)acrylique dans le sirop (meth)acrylique sans pour autant diminuer la masse moléculaire moyenne en poids. Par conséquent, dans ce cas, le rapport en polymère /monomère est augmenté.

Les particules de PMMA réticulées se présentent sous forme de billes. Ce sont des particules discrètes qui se répartissent très bien et de manière homogène dans le sirop (meth) acrylique. Etant donné que ce sont des particules discrètes réticulées, elles ne se dissolvent pas dans le monomère (meth)acrylique. En revanche, si les billes ne sont pas assez réticulées, cela risque d'affecter la quantité de monomère et les billes risquent de gonfler dans le monomère entraînant une augmentation significative de la viscosité du sirop.

Pour éviter une telle augmentation de la viscosité, et conserver une viscosité du sirop (meth)acrylique comprise entre 10 mPa*s et 10 000 mPa*s, de préférence entre 50 mPa*s et 5 000 mPa*s et avantageusement entre 100 mPa*s et 1 000 mPa*s, les billes de PMMA doivent donc être très réticulées. Pour cela, elles comprennent un agent de réticulation dont les proportions sont supérieures à 0,5%, de préférence supérieures à 1% et avantageusement supérieures à 2% du poids total des billes de PMMA.

Les billes de PMMA réticulées présentent une très bonne adhésion à l'interface entre les billes et la matrice polymère une fois le sirop (meth)acrylique polymérisé. Les billes peuvent participer à la réaction de polymérisation et ainsi se lier de manière covalente à la matrice. Dans ce cas, des molécules linéaires de polymère (méth)acrylique se lient de manière covalente à la surface des billes. Cette adhésion à l'interface permet d'améliorer les propriétés mécaniques de la matrice obtenue après polymérisation du sirop.

De préférence, les billes de PMMA réticulées présentent un taux de gonflement dans le monomère (méth)acrylique inférieur à 200%, de préférence inférieur à 150%, et avantageusement inférieur à 120%.

Leur diamètre moyen $D_{50}$ est inférieur à 50 microns, de préférence inférieur à 20 microns et avantageusement inférieur à 5 microns. Ce diamètre moyen $D_{50}$ des particules est mesuré par granulométrie à diffraction laser, au moyen d'un instrument de la gamme Microtrac (marque déposée). Pour l'estimation du diamètre moyen des particules, on mesure le diamètre moyen en volume $D_{50}$ ou D(v ;0,5), qui correspond à la taille de la particule pour laquelle 50% de l'échantillon a une taille inférieure à cette taille et 50% de l'échantillon a une taille supérieure à cette taille ou, en d'autres termes, le diamètre équivalent en volume à 50% de volume cumulé. Cette taille est également appelée diamètre moyen en volume, lequel est relié au diamètre médian en masse par la masse volumique des particules, en supposant une masse volumique indépendante de la taille des particules.

Avec de telles caractéristiques, les billes de PMMA réticulées peuvent être introduites dans le sirop avec des proportions comprises entre 5% et 70% en poids, de préférence entre 10% et 70% en poids, de manière plus préférée entre 5% et 65%, de manière encore plus préférée entre 20% et 60% et avantageusement entre 30% et 50%.

La composition du sirop (méth)acrylique liquide selon un premier mode de l'invention est donc la suivante :

a)de 10 % en poids à 30 % en poids d'un polymère (méth)acrylique,
b) de 70% en poids à 90 % en poids d'un monomère (méth)acrylique,
c) de 0 % en poids à 70% en poids de billes de PMMA réticulées.

De préférence la composition du sirop (méth)acrylique liquide selon le premier mode de l'invention est donc la suivante :

a)de 5% en poids à 30% en poids d'un polymère (méth)acrylique,
b) de 70% en poids à 90 % en poids d'un monomère (méth)acrylique,
c) de 5 % en poids à 70% en poids de billes de PMMA réticulées.

De manière plus préférée la composition du sirop (méth)acrylique liquide selon le premier mode de l'invention est donc la suivante :

a)de 10 % en poids à 25 % en poids d'un polymère (méth)acrylique,
b) de 70% en poids à 85 % en poids d'un monomère (méth)acrylique,
c) de 5 % en poids à 70% en poids de billes de PMMA réticulées.

Avantageusement la composition du sirop (méth)acrylique liquide selon le premier mode de l'invention est donc la suivante :

a)de 10 % en poids à 25 % en poids d'un polymère (méth)acrylique,
b) de 70% en poids à 85 % en poids d'un monomère (méth)acrylique,
c) de 5 % en poids à 20% en poids de billes de PMMA réticulées.

La composition du sirop (méth)acrylique liquide selon le deuxième mode de l'invention est la suivante :

a)de 5% en poids à 25 % en poids d'un polymère (méth)acrylique,
b) de 30% en poids à 70 % en poids d'un monomère (méth)acrylique,
c) de 5 % en poids à 65% en poids de billes de PMMA réticulées.

De préférence la composition du sirop (méth)acrylique liquide selon le deuxième mode de l'invention est la suivante :

a)de 5% en poids à 20% en poids d'un polymère (méth)acrylique,

b) de 35% en poids à 60 % en poids d'un monomère (méth)acrylique,
c) de 20 % en poids à 60% en poids de billes de PMMA réticulées.

Avantageusement la composition du sirop (méth)acrylique liquide selon le deuxième mode de l'invention est donc la suivante :

a)de 5% en poids à 15 % en poids d'un polymère (méth)acrylique,
b) de 35% en poids à 55 % en poids d'un monomère (méth)acrylique,
c) de 30 % en poids à 50% en poids de billes de PMMA réticulées.

Grâce à la présence de ces billes de PMMA réticulées dans le sirop, le taux de monomère est diminué si bien qu'à la fin de la polymérisation du sirop (méth)acrylique, il ne reste qu'une très faible quantité de monomère résiduel voire plus du tout. Le pic exothermique généré par la polymérisation est également abaissé. Le phénomène de retrait est également significativement réduit.

Les billes de PMMA réticulées peuvent être remplacées, ou incorporées avec d'autres particules minérales, en particulier des billes de verre creuses.

Ces billes de verre sont en général en borosilicate. Ces billes sont creuses, elles présentent une faible densité, elles sont très stables chimiquement et résistantes à la compression. Leur faible densité permet de les disperser très facilement dans le sirop. Elles ne gonflent pas dans le monomère (meth)acrylique et n'influencent donc pas la viscosité du sirop. Par conséquent, il est possible d'en mettre un taux élevé, compris entre 5% et 70% en poids, de préférence entre 10% et 70%, de manière plus préférée entre 5% et 65%, de manière encore plus préférée entre 20% et 60%, et avantageusement entre 30% et 50%. On obtient par conséquent un sirop dont la viscosité optimale est conservée, c'est-à-dire comprise entre 10 mPa*s et 10 000 mPa*s, de préférence entre 50 mPa*s et 5 000 mPa*s et avantageusement entre 100 mPa*s et 1 000 mPa*s, qui permet une très bonne imprégnation des fibres du substrat fibreux, et qui comprend un taux réduit de monomère. Par conséquent, durant la polymérisation, la température du pic exothermique est diminuée, le taux de monomère résiduel en fin de polymérisation est significativement réduit, et le phénomène de retrait est significativement réduit également.

De préférence, pour obtenir une répartition homogène des billes de verres dans les fibres du substrat fibreux au moment de l'imprégnation, les billes de verre présentent un diamètre moyen $D_{50}$ inférieur à 50 microns, de préférence inférieur à 20 microns et avantageusement inférieur à 5 microns. Ce diamètre moyen en volume des particules est mesuré par granulométrie à diffraction laser, au moyen d'un instrument de la gamme Microtrac (marque déposée). Ainsi, les billes de verre se répartissent dans tout le matériau composite et contribuent également à l'obtention d'un composite présentant de bonnes propriétés mécaniques et notamment une bonne résistance à la compression.

La composition du sirop (méth)acrylique liquide selon le troisième mode de l'invention est donc la suivante :

a) de 10 % en poids à 30 % en poids d'un polymère (méth)acrylique,
b) de 70% en poids à 90 % en poids d'un monomère (méth)acrylique,
c) de 0 % en poids à 70 % en poids de billes de verre creuses.

De préférence la composition du sirop (méth)acrylique liquide selon le troisième mode de l'invention est la suivante :

a) de 5 % en poids à 30% en poids d'un polymère (méth)acrylique,
b) de 70% en poids à 90% en poids d'un monomère (méth)acrylique,
c) de 5% en poids à 70% en poids de billes de verre creuses.

De manière plus préférée la composition du sirop (méth)acrylique liquide selon le troisième mode de l'invention est la suivante :

a) de 10 % en poids à 25 % en poids d'un polymère (méth)acrylique,
b) de 70% en poids à 85 % en poids d'un monomère (méth)acrylique,
c) de 5% en poids à 70 % en poids de billes de verre creuses.

Avantageusement la composition du sirop (méth)acrylique liquide selon le troisième mode de l'invention est la suivante :

a) de 10 % en poids à 25 % en poids d'un polymère (méth)acrylique,
b) de 70% en poids à 85 % en poids d'un monomère (méth)acrylique,
c) de 5% en poids à 20 % en poids de billes de verre creuses.

La composition du sirop (méth)acrylique liquide selon le quatrième mode de l'invention est la suivante :

a) de 5% en poids à 25 % en poids d'un polymère (méth)acrylique,
b) de 30% en poids à 70 % en poids d'un monomère (méth)acrylique,
c) de 5 % en poids à 65% en poids de billes de verre creuses.

De préférence la composition du sirop (méth)acrylique liquide selon le quatrième mode de l'invention est la suivante :

a) de 5% en poids à 20% en poids d'un polymère (méth)acrylique,
b) de 35% en poids à 60 % en poids d'un monomère (méth)acrylique,
c) de 20 % en poids à 60% en poids de billes de verre creuses.

Avantageusement la composition du sirop (méth)acrylique liquide selon le quatrième mode de l'invention est donc la suivante :

a) de 5% en poids à 15 % en poids d'un polymère (méth)acrylique,
b) de 35% en poids à 55 % en poids d'un monomère (méth)acrylique,
c) de 30 % en poids à 50% en poids de de billes de verre creuses.

Toutes les charges sont ajoutées au sirop (méth)acrylique liquide, à température ambiante, avant l'imprégnation.

**S'agissant du procédé de fabrication du sirop (méth)acrylique liquide,** une première étape consiste à préparer un premier sirop comprenant le monomère (méth)acrylique ou mélange de monomères (méth)acrylique et un polymère (méth)acrylique. Les charges, que ce soient des billes de PMMA réticulées ou des billes de verre creuses, ou un mélange de ces deux types de particules, sont ensuite incorporées au sirop (meth) acrylique, à la température ambiante de l'ordre de 20°C, dans les proportions indiquées ci-dessus afin de conserver une viscosité dynamique comprise entre 10 mPa*s et 10 000 mPa*s, de préférence entre 50 mPa*s et 5 000 mPa*s et avantageusement entre 100 mPa*s et 1 000 mPa*s.

**En ce qui concerne le procédé d'imprégnation du substrat fibreux,** il comprend une étape d'imprégnation du substrat fibreux avec le sirop (méth)acrylique liquide. Cette étape d'imprégnation se fait dans un moule fermé.

Si la viscosité du sirop (méth)acrylique liquide à une température donnée est un peu trop élevée pour le procédé d'imprégnation, il est possible de chauffer le sirop afin d'avoir un sirop plus liquide pour le mouillage suffisant et l'imprégnation correcte et complète du substrat fibreux.

**S'agissant du substrat fibreux,** on peut mentionner les tissus, les feutres ou les non-tissés qui peuvent être sous la forme de bandes, de nappes, de tresses, de mèches ou de pièces. Le matériau fibreux peut avoir différentes formes et dimensions, monodimensionnelles, bidimensionnelles ou tridimensionnelles. Un substrat fibreux comprend un assemblage d'une ou de plusieurs fibres. Lorsque les fibres sont continues, leur assemblage forme des tissus.

La forme monodimensionnelle correspond à des fibres linéaires. Les fibres peuvent être discontinues ou continues. Les fibres peuvent être agencées de manière aléatoire ou en parallèle les unes aux autres sous la forme d'un filament continu. Une fibre est définie par son rapport de longueur, qui est le rapport entre la longueur et le diamètre de la fibre. Les fibres utilisées dans la présente invention sont des fibres longues ou des fibres continues. Les fibres ont un rapport de longueur d'au moins 1 000, de préférence d'au moins 1 500, de manière davantage préférée d'au moins 2 000, avantageusement d'au moins 3 000 et le plus avantageusement d'au moins 5 000.

La forme bidimensionnelle correspond à des mats fibreux ou des renforts non tissés ou tissés ou des faisceaux de fibres, qui peuvent également être tressés.

La forme tridimensionnelle correspond par exemple à des mats fibreux ou des renforts non tissés ou des faisceaux de fibres ou leurs mélanges, empilés ou pliés, un assemblage de la forme bidimensionnelle dans la troisième dimension.

Les origines du matériau fibreux peuvent être naturelles ou synthétiques. En tant que matériau naturel, on peut mentionner les fibres végétales, les fibres de bois, les fibres animales ou les fibres minérales.

Des fibres naturelles sont par exemple le sisal, le jute, le chanvre, le lin, le coton, les fibres de noix de coco et les fibres de banane. Des fibres animales sont par exemple la laine ou les cheveux.

En tant que matériau synthétique, on peut mentionner des fibres polymères choisies parmi les fibres de polymères thermodurcissables, de polymères thermoplastiques ou leurs mélanges.

Les fibres polymères peuvent être constituées de polyamide (aliphatique ou aromatique), de polyester, d'alcool polyvinylique, de polyoléfines, de polyuréthanes, de polychlorure de vinyle, de polyéthylène, de polyesters insaturés, de résines époxy et d'esters de vinyle.

Les fibres minérales peuvent également être choisies parmi les fibres de verre, notamment de type E, R ou S2, les fibres de carbone, les fibres de bore ou les fibres de silice.

Le substrat fibreux de la présente invention est choisi parmi les fibres végétales, les fibres de bois, les fibres animales, les fibres minérales, les fibres polymères synthétiques, les fibres de verre, les fibres de carbone ou leurs mélanges.

De préférence, le substrat fibreux est choisi parmi les fibres minérales.

Selon un aspect supplémentaire, l'invention concerne un matériau composite polymère comprenant une matrice (méth)acrylique thermoplastique et un substrat fibreux utilisé comme renfort, dans lequel le substrat fibreux est constitué de fibres longues, ledit matériau composite étant caractérisé en ce que la matrice (méth)acrylique thermoplastique est obtenue après polymérisation dudit substrat fibreux pré-imprégné dudit sirop (méth)acrylique liquide.

Un autre aspect de la présente invention est un procédé de fabrication de pièces mécaniques ou structurelles en matériau composite comprenant les étapes suivantes :

a) l'imprégnation d'un substrat fibreux avec le sirop (méth)acrylique liquide,
b) la polymérisation du sirop (méth)acrylique liquide imprégnant ledit substrat fibreux.

L'imprégnation du substrat fibreux à l'étape a) est de préférence réalisée dans un moule fermé.

Avantageusement, l'étape a) et l'étape b) sont réalisées dans le même moule fermé.

**En ce qui concerne le procédé de fabrication** de pièces composites, différents procédés pourraient être utilisés pour préparer des pièces. On peut mentionner l'infusion, le moulage en sac sous vide, le moulage en sac sous pression, le moulage en autoclave, le moulage par transfert de résine (RTM), le moulage par injection-réaction (RIM), le moulage par injection-réaction renforcé (R-RIM) et ses variantes, le moulage sous presse ou le moulage par compression.

Les procédés de fabrication préférés pour la fabrication de pièces composites sont des procédés selon lesquels le sirop (méth)acrylique liquide est transféré au substrat fibreux par imprégnation du substrat fibreux dans un moule, de manière davantage préférée dans un moule fermé.

Avantageusement, l'étape d'imprégnation du matériau fibreux est réalisée dans un moule fermé.

Le plus avantageusement, le procédé de fabrication de pièces composites est choisi parmi le moulage par transfert de résine ou l'infusion.

Tous les procédés comprennent l'étape d'imprégnation du substrat fibreux avec le sirop (méth)acrylique liquide avant l'étape de polymérisation dans un moule.

L'étape de polymérisation du sirop (méth)acrylique liquide imprégnant ledit substrat fibreux a lieu après l'étape d'imprégnation dans le même moule.

Le moulage par transfert de résine est un procédé utilisant un ensemble de moulage à deux côtés qui forme les deux surfaces d'un matériau composite. Le côté inférieur est un moule rigide. Le côté supérieur peut être un moule rigide ou flexible. Des moules flexibles peuvent être fabriqués à partir de matériaux composites, de silicone ou de films polymères extrudés tels que le nylon. Les deux côtés s'emboîtent pour former une cavité de moulage. La caractéristique distinctive du moulage par transfert de résine est que le substrat fibreux est placé dans cette cavité et que l'ensemble de moulage est fermé avant l'introduction du sirop (méth)acrylique liquide. Le moulage par transfert de résine comprend de nombreuses variétés qui diffèrent au niveau de la mécanique d'introduction du sirop (méth)acrylique liquide dans le substrat fibreux dans la cavité de moulage. Ces variations vont de l'infusion sous vide au moulage par transfert de résine sous vide (VARTM). Ce procédé peut être réalisé à température ambiante ou élevée.

Avec le procédé d'infusion, le sirop (méth)acrylique liquide doit avoir la viscosité adaptée pour ce procédé de préparation du matériau composite polymère. Le sirop (méth)acrylique liquide est aspiré dans le substrat fibreux présent dans un moule spécial par application d'un léger vide. Le substrat fibreux est infusé et complètement imprégné par le sirop (méth)acrylique liquide.

Un avantage de ce procédé est la grande quantité de matériau fibreux dans le composite.

En ce qui concerne l'utilisation des pièces composites ainsi fabriquées, on peut mentionner les applications automobiles, les applications nautiques, les applications ferroviaires, le sport, les applications aéronautiques et aérospatiales, les applications photovoltaïques, les applications informatiques, les applications pour les télécommunications et les applications pour l'énergie éolienne.

La pièce composite est notamment une pièce d'automobile, une pièce de bateau, une pièce de train, un article de sport, une pièce d'avion ou d'hélicoptère, une pièce de vaisseau spatial ou de fusée, une pièce de module photovoltaïque, une pièce d'éolienne, une pièce de meuble, une pièce de construction ou de bâtiment, une pièce de téléphone ou de téléphone portable, une pièce d'ordinateur ou de télévision, une pièce d'imprimante et de photocopieuse.

En ce qui concerne le recyclage de la pièce composite thermoplastique, il peut être réalisé par broyage ou dépolymérisation du polymère thermoplastique.

Le broyage est effectué mécaniquement afin d'obtenir des parties plus petites de la pièce. Puisque la pièce comprend un polymère thermoplastique, ce polymère peut être chauffé, et les pièces de nouveau transformées dans une certaine limite pour obtenir un objet recyclé.

De préférence, la pièce composite thermoplastique est chauffée pour réaliser une pyrolyse ou une décomposition thermique du polymère (méth)acrylique et récupérer le méthacrylate de méthyle en tant que monomère.

Avantageusement, au moins 90 % en poids du MMA présent dans le polymère sont récupérés par décomposition thermique.

La pièce est portée à une température d'au moins 500°C et inférieure ou égale à 600°C.

**[Exemples]**

**Exemple 1 : fabrication d'un composite thermoplastique à base d'un sirop (méth) acrylique comprenant des billes de PMMA réticulées**

1ère étape : synthèse des billes de PMMA réticulées

Des billes de PMMA réticulées ont été synthétisées par polymérisation en suspension de méthacrylate de méthyle (MMA) et d'acrylate d'éthyle en tant que comonomère, présent dans des proportions de préférence inférieures à 10%, avantageusement inférieures à 5% en poids, en utilisant un peroxyde ayant une température de décomposition pour un temps de demi-vie d'une minute supérieure à 100°C, à une concentration inférieure à 1%, de préférence inférieure à 0,5% et avantageusement inférieure à 0,3%. De l'allyl méthacrylate (ALMA) ou du butane diol dimethacrylate (BDDMA) peut être utilisé comme agent de réticulation, dans des proportions pondérales de préférence supérieures à 0,5% en poids, de préférence supérieures à 1% en poids et avantageusement supérieures à 2% en poids, et un poly 2-acrylamido-2-methyl propanesulfonic acid (PAMS) peut être utilisé comme agent de suspension.

La taille des billes peut être contrôlée en faisant varier le taux d'agent de suspension et la vitesse d'agitation dans le réacteur. Les billes synthétisées présentent des diamètres allant de 5 $\mu$m à 20$\mu$m.

Le taux de réticulation a une influence directe sur le taux de gonflement.

Les billes synthétisées présentent un taux de gonflement, dans le monomère (méth)acrylique de 150%.

Le taux de gonflement est estimé par le changement de taille des particules dans un solvant, dans le cas présent, le monomère. La taille des particules est mesuré par la diffusion dynamique de la lumière (DLS) qui est une technique d'analyse spectroscopique non destructive permettant d'accéder à la taille de particules en suspension dans un liquide, bien connue pour caractériser la taille des particules. Lorsque les particules sont dans le monomère, un gonflement est observé comparativement à ces mêmes particules dans l'eau. La comparaison de la taille des particules indique une gonflement, si la taille des particules dans le monomère (méth)acrylique $d_m$ (diamètre dans monomère) est plus importante que la taille des particules dans l'eau $d_0$ (diamètre dans l'eau). Le taux de gonflement est calculé selon la formule suivant :

$$100 \times \left( \frac{d_m}{d_0} \right)^3 \text{ en } \%$$

Si la taille des particules augment d'un diamètre moyen en volume $D_{50}$ de 2$\mu$m dans l'eau à 2.2$\mu$m dans le monomère méth) acrylique le taux de gonflement est de

133%.

*2ème* étape : préparation du sirop (méth)acrylique

Un sirop est préparé par dissolution de 10% en poids du PMMA (BS520 un copolymère de MMA comprenant de l'acrylate d'éthyle en tant que comonomère, commercialisé par la société Altuglas International) dans 90% en poids de méthacrylate de méthyle, qui est stabilisé avec du MEHQ (éther monométhylique d'hydroquinone).

Les billes préparées à l'étape 1 sont incorporées dans ce sirop (méth)acrylique, de telle sorte que les proportions en polymère (méth)acrylique, en monomère (méth)acrylique et en billes de PMMA réticulées dans le sirop sont les suivantes : 5% de polymère (méthacrylique), 45% de méthacrylate de méthyle et 50% de billes de PMMA réticulées.

Le sirop (méth)acrylique obtenu présente une viscosité de 875 mPa.s à 25°C.

Aux 100 parts en poids du sirop, sont rajoutés 2 parts en poids de peroxyde de benzoyle (BPO - Luperox A75 de la société Arkema) et 0,2 part en poids de DMPT (N, N-diméthyl-p-toluidine de Sigma-Aldrich)

*3ème* étape : imprégnation d'un substrat fibreux et polymérisation

Un substrat fibreux en fibres de verre est placé dans un moule fermé. Le sirop (meth) acrylique est injecté dans le moule fermé comprenant le tissus de verre et polymérisé à 25°C pendant 80 minutes.

Durant la polymérisation, on constate une baisse de la température du pic exothermique comparativement à un sirop (méth)acrylique de même viscosité mais comprenant 25% en poids de polymère (méth)acrylique et 75% en poids de monomère (meth)acrylique. La température du pic exothermique est dans ce cas abaissée de 10°C.

La pièce composite obtenue ne présente pas de retrait et ne présente pas de défaut de surface.

**Exemple 2: fabrication d'un composite thermoplastique à base d'un sirop (méth)acrylique comprenant des billes de verre.**

*1ère* étape : préparation du sirop (méth)acrylique

Un sirop est préparé par dissolution de 10% en poids du PMMA (BS520 un copolymère de MMA comprenant de l'acrylate d'éthyle en tant que comonomère) dans 90% en poids de méthacrylate de méthyle, qui est stabilisé avec du MEHQ (éther monométhylique d'hydroquinone).

Des billes de verre creuses (de la société 3M) présentant un diamètre de 5 μm sont incorporées dans le sirop (méth)acrylique, de telle sorte que les proportions en polymère (meth)acrylique, en monomère (meth)acrylique et en billes de verre dans le sirop sont les suivantes : 5% de polymère (méthacrylique), 45% de méthacrylate de méthyle et 50% de billes de verre.

Le sirop (méth)acrylique obtenu présente une viscosité de 734 mPa.s à 25°C.

Aux 100 parts en poids du sirop, sont rajoutés 2 parts en poids de peroxyde de benzoyle (BPO - Luperox A75 de la société Arkema) et 0,2 part en poids de DMPT (N, N-diméthyl-p-toluidine de Sigma-Aldrich)

*2ème* étape : imprégnation d'un substrat fibreux et polymérisation

Un substrat fibreux en fibres de verre est placé dans un moule fermé. Le sirop (meth) acrylique est injecté dans le moule fermé comprenant le tissus de verre et polymérisé à 25°C pendant 80 minutes.

Durant la polymérisation, on constate une baisse de la température du pic exothermique comparativement à un sirop (méth)acrylique de même viscosité mais comprenant 25% en poids de polymère et 75% en poids de monomère. La température du pic exothermique est dans ce cas 32°C.

La pièce composite obtenue ne présente pas de retrait et ne présente pas de défaut de surface et présente une résistance à la compression améliorée.

**Revendications**

1. Sirop (meth)acrylique liquide d'imprégnation d'un substrat fibreux, ledit substrat fibreux étant constitué de fibres longues, ledit sirop étant **caractérisé en ce qu'**il comprend :

   a) un polymère (méth)acrylique,
   b) un monomère (méth)acrylique,
   c) des charges choisies parmi des particules présentant un taux de gonflement dans le monomère (meth)acrylique inférieur à 200 %, de préférence inférieur à 150 % et avantageusement inférieur à 120 %, le taux de gonflement étant défini comme étant la capacité d'une particule plongée dans un composé à changer de volume, et un diamètre moyen $D_{50}$ inférieur à 50 μm, de préférence inférieur à 20 μm, et avantageusement inférieur à 5 μm,

   mesuré par granulométrie à diffraction laser, ledit sirop (méth)acrylique liquide ayant une viscosité dynamique, mesurée à 25°C, comprise entre 10 mPa*s et 10 000 mPa*s, de préférence entre 50 mPa*s et 5 000 mPa*s et avantageusement entre 100 mPa*s et 1 000 mPa*s.

2. Sirop (meth)acrylique liquide selon la revendication 1, **caractérisé en ce que** les charges sont choisies parmi au moins une des charges suivantes:

• des billes de PMMA réticulées avec un agent de réticulation présent dans des proportions supérieures à 0,5 %, de préférence supérieures à 1 % et avantageusement supérieures à 2 % en poids des billes de PMMA, lesdites billes de PMMA réticulées présentant un taux de gonflement dans le monomère (meth)acrylique inférieur à 200 %, de préférence inférieur à 150 % et avantageusement inférieur à 120 %, et un diamètre moyen $D_{50}$ inférieur à 50 $\mu$m, de préférence inférieur à 20 $\mu$m, et avantageusement inférieur à 5 $\mu$m,
• des billes de verres creuses dont le diamètre moyen $D_{50}$ est inférieur à 50 $\mu$m, de préférence inférieur à 20 $\mu$m, et avantageusement inférieur à 5 $\mu$m.

3. Sirop (meth)acrylique liquide selon l'une des revendications 1 ou 2, **caractérisé en ce que** les charges sont des billes de PMMA réticulées, et représentent entre 10 et 70% en poids, de préférence entre 20 et 60% en poids et avantageusement entre 30 et 50% en poids du sirop (méth)acrylique liquide total.

4. Sirop (meth)acrylique liquide selon l'une quelconque des revendications précédentes, **caractérisé en ce que** le sirop (méth)acrylique liquide comprend :

   a) de 5 % en poids à 30 % en poids d'un polymère (méth)acrylique,
   b) de 70% en poids à 90 % en poids d'un monomère (méth)acrylique,
   c) de 5 % en poids à 70% en poids de billes de PMMA
   réticulées.

5. Sirop (meth)acrylique liquide selon l'une quelconque des revendications 1 à 3, **caractérisé en ce que** le sirop (méth)acrylique liquide comprend :

   a) de 10 % en poids à 25 % en poids d'un polymère (méth)acrylique,
   b) de 70% en poids à 85 % en poids d'un monomère (méth)acrylique,
   c) de 5 % en poids à 70% en poids de billes de PMMA réticulées.

6. Sirop (meth)acrylique liquide selon l'une quelconque des revendications 1 à 3, **caractérisé en ce que** le sirop (méth)acrylique liquide comprend :

   a) de 5% en poids à 25 % en poids d'un polymère (méth)acrylique,
   b) de 30% en poids à 70 % en poids d'un monomère (méth)acrylique,
   c) de 5 % en poids à 65% en poids de billes de PMMA réticulées.

7. Sirop (meth)acrylique liquide selon l'une des revendications 1 ou 2, **caractérisé en ce que** les charges sont des billes verre creuses, et représentent entre 5 et 70% en poids, de préférence entre 10 et 70% en poids, de manière encore plus préférée entre 20 et 60% en poids et avantageusement entre 30 et 50% en poids du sirop (méth)acrylique liquide total.

8. Sirop (meth)acrylique liquide selon la revendication 7, **caractérisé en ce que** le sirop (méth)acrylique liquide comprend :

   a) de 5 % en poids à 30 % en poids d'un polymère (méth)acrylique,
   b) de 70% en poids à 90 % en poids d'un monomère (méth)acrylique,
   c) de 5 % en poids à 70% en poids de billes de verre
   creuses.

9. Sirop (meth)acrylique liquide selon la revendication 7, **caractérisé en ce que** le sirop (méth)acrylique liquide comprend :

   a) de 5% en poids à 25 % en poids d'un polymère (méth)acrylique,
   b) de 30% en poids à 70 % en poids d'un monomère (méth)acrylique,
   c) de 5 % en poids à 65% en poids de billes de verre creuses.

10. Sirop (meth)acrylique liquide selon la revendication 1, **caractérisé en ce que** le polymère (méth)acrylique est un homo- ou copolymère de méthacrylate de méthyle (MMA) ou un de leurs mélanges.

11. Sirop (meth)acrylique liquide selon la revendication 1, **caractérisé en ce que** le monomère (méth)acrylique est choisi parmi l'acide acrylique, l'acide méthacrylique, les monomères acryliques d'alkyle, les monomères méthacryliques d'alkyle et leurs mélanges, le groupe alkyle contenant de 1 à 22 carbones, linéaires, ramifiés ou cycliques ; le groupe alkyle contenant de préférence 1 à 12 carbones, linéaires, ramifiés ou cycliques.

12. Procédé d'imprégnation pour l'imprégnation d'un substrat fibreux, ledit substrat fibreux étant constitué de fibres longues et ledit procédé comprenant une étape d'imprégnation dudit substrat fibreux avec ledit sirop (méth)acrylique selon l'une des revendications 1 à 11.

13. Matériau composite polymère comprenant une matrice (méth)acrylique thermoplastique et un substrat fibreux utilisé comme renfort, dans lequel le substrat fibreux est constitué de fibres longues, ledit matériau composite étant **caractérisé en ce que** la matrice (méth)acrylique thermoplastique est obtenue après polymérisation dudit substrat fibreux pré-imprégné dudit sirop (méth)acryique liquide selon l'une quelconque des revendications 1 à 11.

14. Procédé de fabrication de pièces mécaniques ou structurelles en matériau composite, comprenant les étapes suivantes :

a) l'imprégnation d'un substrat fibreux avec un sirop (méth)acrylique liquide selon l'une quelconque des revendications 1 à 11,
b) la polymérisation du sirop (méth)acrylique liquide imprégnant ledit substrat fibreux.

15. Procédé de fabrication selon la revendication 14, **caractérisé en ce que** l'imprégnation du substrat fibreux à l'étape a) est réalisée dans un moule fermé.

16. Procédé de fabrication selon l'une quelconque des revendications 14 à 15, **caractérisé en ce que** le procédé est choisi parmi le moulage par transfert de résine ou l'infusion.

17. Pièce mécanique ou structurelle en matériau composite selon la revendication 13, ou obtenue par le procédé de fabrication selon les revendications 14 à 16.

18. Pièce selon la revendication 17, ladite pièce étant une pièce d'automobile, une pièce de bateau, une pièce de train, un article de sport, une pièce d'avion ou d'hélicoptère, une pièce de vaisseau spatial ou de fusée, une pièce de module photovoltaïque, une pièce d'éolienne, une pièce de meuble, une pièce de construction ou de bâtiment, une pièce de téléphone ou de téléphone portable, une pièce d'ordinateur ou de télévision, une pièce d'imprimante et de photocopieuse.

**Patentansprüche**

1. Flüssig(meth)acrylsirup zum Imprägnieren eines Fasersubstrats, wobei das Fasersubstrat aus langen Fasern besteht, wobei der Sirup **dadurch gekennzeichnet ist, dass** er umfasst:

a) ein (Meth)acrylpolymer,
b) ein (Meth)acrylmonomer,
c) Chargen, die ausgewählt sind aus Partikeln mit einem Quellverhältnis im (Meth)acrylmonomer von weniger als 200 %, vorzugsweise weniger als 150 % und vorteilhaft weniger als 120 %, wobei das Quellverhältnis definiert ist als Kapazität eines in eine Verbindung eingetauchten Partikels, sich im Volumen zu verändern, und mit einem mittleren Durchmesser $D_{50}$ von weniger als 50 $\mu$m, vorzugsweise weniger als 20 $\mu$m und vorteilhaft weniger als 5 $\mu$m, gemessen durch Laserdiffraktionsgranulometrie,

wobei der Flüssig(meth)acrylsirup eine dynamische Viskosität, gemessen bei 25°C, zwischen 10 mPa*s und 10 000 mPa*s, vorzugsweise zwischen 50 mPa*s und 5 000 mPa*s und vorteilhaft zwischen 100 mPa*s und 1 000 mPa*s aufweist.

2. Flüssig(meth)acrylsirup nach Anspruch 1, **dadurch gekennzeichnet, dass** die Chargen ausgewählt sind aus mindestens einer der folgenden Chargen:

- PMMA-Kügelchen, die mit einem Vernetzungsmittel vernetzt sind, das in Mengen von mehr als 0,5 %, vorzugsweise mehr als 1 % und vorteilhaft mehr als 2 %, bezogen auf das Gewicht der PMMA-Kügelchen, vorhanden ist, wobei die vernetzten PMMA-Kügelchen ein Quellverhältnis im (Meth)acrylmonomer von weniger als 200 %, vorzugsweise weniger als 150 % und vorteilhaft weniger als 120 %, und einen mittleren Durchmesser $D_{50}$ von weniger als 50 $\mu$m, vorzugsweise weniger als 20 $\mu$m und vorteilhaft weniger als 5 $\mu$m aufweisen,
- Hohlglaskügelchen, deren mittlerer Durchmesser $D_{50}$ kleiner ist als 50 $\mu$m, vorzugsweise kleiner als 20 $\mu$m und vorteilhaft kleiner als 5 $\mu$m.

3. Flüssig(meth)acrylsirup nach einem der Ansprüche 1 oder 2, **dadurch gekennzeichnet, dass** die Chargen vernetzte PMMA-Kügelchen sind und zwischen 10 und 70 Gew.-%, vorzugsweise zwischen 20 und 60 Gew.-% und vorteilhaft zwischen 30 und 50 Gew.-% des gesamten Flüssig(meth)acrylsirups bilden.

4. Flüssig(meth)acrylsirup nach einem der vorhergehenden Ansprüche, **dadurch gekennzeichnet, dass** der Flüssig(meth)acrylsirup umfasst:

a) von 5 Gew.-% bis 30 Gew.-% eines (Meth)acrylpolymers,
b) von 70 Gew.-% bis 90 Gew.-% eines (Meth)acrylmonomers,
c) von 5 Gew.-% bis 70 Gew.-% vernetzte PMMA-Kügelchen.

5. Flüssig(meth)acrylsirup nach einem der Ansprüche 1 bis 3, **dadurch gekennzeichnet, dass** der Flüssig(meth)acrylsirup umfasst:

a) von 10 Gew.-% bis 25 Gew.-% eines (Meth)acrylpolymers,
b) von 70 Gew.-% bis 85 Gew.-% eines (Meth)acrylmonomers,
c) von 5 Gew.-% bis 70 Gew.-% vernetzte PMMA-Kügelchen.

**6.** Flüssig(meth)acrylsirup nach einem der Ansprüche 1 bis 3, **dadurch gekennzeichnet, dass** der Flüssig(meth)acrylsirup umfasst:

a) von 5 Gew.-% bis 25 Gew.-% eines (Meth)acrylpolymers,
b) von 30 Gew.-% bis 70 Gew.-% eines (Meth)acrylmonomers,
c) von 5 Gew.-% bis 65 Gew.-% vernetzte PMMA-Kügelchen.

**7.** Flüssig(meth)acrylsirup nach einem der Ansprüche 1 oder 2, **dadurch gekennzeichnet, dass** die Chargen Hohlglaskügelchen sind und zwischen 5 und 70 Gew.-%, vorzugsweise zwischen 10 und 70 Gew.-%, noch bevorzugter zwischen 20 und 60 Gew.-% und vorteilhaft zwischen 30 und 50 Gew.-% des gesamten Flüssig(meth)acrylsirups bilden.

**8.** Flüssig(meth)acrylsirup nach Anspruch 7, **dadurch gekennzeichnet, dass** der Flüssig(meth)acrylsirup umfasst:

a) von 5 Gew.-% bis 30 Gew.-% eines (Meth)acrylpolymers,
b) von 70 Gew.-% bis 90 Gew.-% eines (Meth)acrylmonomers,
c) von 5 Gew.-% bis 70 Gew.-% Hohlglaskügelchen.

**9.** Flüssig(meth)acrylsirup nach Anspruch 7, **dadurch gekennzeichnet, dass** der Flüssig(meth)acrylsirup umfasst:

a) von 5 Gew.-% bis 25 Gew.-% eines (Meth)acrylpolymers,
b) von 30 Gew.-% bis 70 Gew.-% eines (Meth)acrylmonomers,
c) von 5 Gew.-% bis 65 Gew.-% Hohlglaskügelchen.

**10.** Flüssig(meth)acrylsirup nach Anspruch 1, **dadurch gekennzeichnet, dass** das (Meth)acrylpolymer ein Homo- oder Copolymer von Methylmethacrylat (MMA) oder eine ihrer Mischungen ist.

**11.** Flüssig(meth)acrylsirup nach Anspruch 1, **dadurch gekennzeichnet, dass** das (Meth)acrylmonomer ausgewählt ist aus Acrylsäure, Methacrylsäure, Alkylacrylmonomeren, Alkylmethacrylmonomeren und ihren Mischungen, wobei die Alkylgruppe 1 bis 22 lineare, verzweigte oder cyclische Kohlenstoffatome enthält; wobei die Alkylgruppe vorzugsweise 1 bis 12 lineare, verzweigte oder cyclische Kohlenstoffatome enthält.

**12.** Verfahren zum Imprägnieren eines Fasersubstrats, wobei das Fasersubstrat aus langen Fasern besteht, und das Verfahren einen Schritt des Imprägnierens des Fasersubstrats mit dem Flüssig(meth)acrylsirup nach einem der Ansprüche 1 bis 11 umfasst.

**13.** Polymerverbundwerkstoff, umfassend eine thermoplastische (Meth)acrylmatrix und ein Fasersubstrat, das als Verstärkung verwendet wird, wobei das Fasersubstrat aus langen Fasern besteht, wobei der Verbundwerkstoff **dadurch gekennzeichnet ist, dass** die thermoplastische (Meth)acrylmatrix nach Polymerisation des Fasersubstrats erhalten wird, das mit dem Flüssig (meth) acrylsirup nach einem der Ansprüche 1 bis 11 vorimprägniert ist.

**14.** Verfahren zur Herstellung mechanischer oder struktureller Teile aus Verbundwerkstoff, umfassend die folgenden Schritte:

a) Imprägnieren eines Fasersubstrats mit einem Flüssig(meth)acrylsirup nach einem der Ansprüche 1 bis 11,
b) Polymerisieren des Flüssig(meth)acrylsirups, mit dem das Fasersubstrat imprägniert ist.

**15.** Herstellungsverfahren nach Anspruch 14, **dadurch gekennzeichnet, dass** das Imprägnieren des Fasersubstrats in Schritt a) in einer geschlossenen Form durchgeführt wird.

**16.** Herstellungsverfahren nach einem der Ansprüche 14 bis 15, **dadurch gekennzeichnet, dass** das Verfahren aus Harzspritzpressen oder Infusion ausgewählt wird.

**17.** Mechanischer oder struktureller Teil aus Verbundwerkstoff nach Anspruch 13, oder erhalten durch das Herstellungsverfahren nach den Ansprüchen 14 bis 16.

**18.** Teil nach Anspruch 17, wobei der Teil ein Teil eines Automobils, ein Teil eines Schiffs, ein Teil eines Zugs, ein Sportartikel, ein Teil eines Flugzeugs oder Helikopters, ein Teil eines Raumfahrzeugs oder einer Rakete, ein Teil eines Photovoltaikmoduls, ein Teil einer Windturbine, ein Teil eines Möbelstücks, ein Teil einer Konstruktion oder eines Gebäudes, ein Teil eines Telefons oder eines tragbaren Telefons, ein Teil eines Rechners oder eines Fernsehgeräts, ein Teil eines Druckers oder eines Fotokopierers ist.

**Claims**

**1.** Liquid (meth)acrylic syrup for impregnating a fibrous substrate, said fibrous substrate consisting of long fibers, said syrup being **characterized in that** it comprises:

a) a (meth)acrylic polymer,
b) a (meth)acrylic monomer,
c) fillers chosen from particles with a degree of swelling in the (meth)acrylic monomer of less than 200%, preferably less than 150% and advantageously less than 120%, the degree of swelling being defined as the capacity of a particle immersed in a compound to change in volume, and a mean diameter $D_{50}$ of less than 50 $\mu$m, preferably less than 20 $\mu$m and advantageously less than 5 $\mu$m, measured by laser scattering granulometry,

said liquid (meth)acrylic syrup having a dynamic viscosity, measured at 25° C, of between 10 mPa.s and 10 000 mPa.s, preferably between 50 mPa.s and 5000 mPa.s and advantageously between 100 mPa.s and 1000 mPa.s.

2. Liquid (meth)acrylic syrup according to Claim 1, **characterized in that** the fillers are chosen from at least one of the following fillers:

   • PMMA beads crosslinked with a crosslinking agent present in proportions of greater than 0.5%, preferably greater than 1% and advantageously greater than 2% by weight of the PMMA beads, said crosslinked PMMA beads having a degree of swelling in the (meth)acrylic monomer of less than 200%, preferably less than 150% and advantageously less than 120%, and a mean diameter $D_{50}$ of less than 50 $\mu$m, preferably less than 20 $\mu$m and advantageously less than 5 $\mu$m,
   • hollow glass beads whose mean diameter $D_{50}$ is less than 50 $\mu$m, preferably less than 20 $\mu$m and advantageously less than 5 $\mu$m.

3. Liquid (meth)acrylic syrup according to either of Claims 1 and 2, **characterized in that** the fillers are crosslinked PMMA beads, and represent between 10% and 70% by weight, preferably between 20% and 60% by weight and advantageously between 30% and 50% by weight of the total liquid (meth)acrylic syrup.

4. Liquid (meth)acrylic syrup according to any one of the preceding claims, **characterized in that** the liquid (meth)acrylic syrup comprises:

   a) from 5% by weight to 30% by weight of a (meth)acrylic polymer,
   b) from 70% by weight to 90% by weight of a (meth)acrylic monomer,
   c) from 5% by weight to 70% by weight of crosslinked
   PMMA beads.

5. Liquid (meth)acrylic syrup according to any one of Claims 1 to 3, **characterized in that** the liquid (meth)acrylic syrup comprises:

   a) from 10% by weight to 25% by weight of a (meth)acrylic polymer,
   b) from 70% by weight to 85% by weight of a (meth)acrylic monomer,
   c) from 5% by weight to 70% by weight of crosslinked PMMA beads.

6. Liquid (meth)acrylic syrup according to any one of Claims 1 to 3, **characterized in that** the liquid (meth)acrylic syrup comprises:

   a) from 5% by weight to 25% by weight of a (meth)acrylic polymer,
   b) from 30% by weight to 70% by weight of a (meth)acrylic monomer,
   c) from 5% by weight to 65% by weight of crosslinked PMMA beads.

7. Liquid (meth)acrylic syrup according to either of Claims 1 and 2, **characterized in that** the fillers are hollow glass beads, and represent between 5% and 70% by weight, preferably between 10% and 70% by weight, even more preferably between 20% and 60% by weight, and advantageously between 30% and 50% by weight of the total liquid (meth)acrylic syrup.

8. Liquid (meth)acrylic syrup according to Claim 7, **characterized in that** the liquid (meth)acrylic syrup comprises:

   a) from 5% by weight to 30% by weight of a (meth)acrylic polymer,
   b) from 70% by weight to 90% by weight of a (meth)acrylic monomer,
   c) from 5% by weight to 70% by weight of hollow glass beads.

9. Liquid (meth)acrylic syrup according to Claim 7, **characterized in that** the liquid (meth)acrylic syrup comprises:

   a) from 5% by weight to 25% by weight of a (meth)acrylic polymer,
   b) from 30% by weight to 70% by weight of a (meth)acrylic monomer,
   c) from 5% by weight to 65% by weight of hollow glass beads.

10. Liquid (meth)acrylic syrup according to Claim 1, **characterized in that** the (meth)acrylic polymer is a homo- or copolymer of methyl methacrylate (MMA) or a mixture thereof.

**11.** Liquid (meth)acrylic syrup according to Claim 1, **characterized in that** the (meth)acrylic monomer is chosen from acrylic acid, methacrylic acid, alkyl acrylic monomers and alkyl methacrylic monomers, and mixtures thereof, the alkyl group containing from 1 to 22 linear, branched or cyclic carbons; the alkyl group preferably containing from 1 to 12 linear, branched or cyclic carbons.

**12.** Impregnation process for impregnating a fibrous substrate, said fibrous substrate consisting of long fibers and said process comprising a step of impregnating said fibrous substrate with said (meth)acrylic syrup according to one of Claims 1 to 11.

**13.** Polymeric composite material comprising a thermoplastic (meth)acrylic matrix and a fibrous substrate used as reinforcement, in which the fibrous substrate consists of long fibers, said composite material being **characterized in that** the thermoplastic (meth)acrylic matrix is obtained after polymerization of said fibrous substrate preimpregnated with said liquid (meth)acrylic syrup according to any one of Claims 1 to 11.

**14.** Process for manufacturing mechanical or structural parts made of composite material, comprising the following steps:

> a) impregnating a fibrous substrate with a liquid (meth)acrylic syrup according to any one of Claims 1 to 11,
> b) polymerizing the liquid (meth)acrylic syrup impregnating said fibrous substrate.

**15.** Manufacturing process according to Claim 14, **characterized in that** the impregnation of the fibrous substrate in step a) is performed in a closed mold.

**16.** Manufacturing process according to any one of Claims 14 to 15, **characterized in that** the process is chosen from resin transfer molding and infusion.

**17.** Mechanical or structural part made of composite material according to Claim 13, or obtained via the manufacturing process according to Claims 14 to 16.

**18.** Part according to Claim 17, said part being a motor vehicle part, boat part, train part, sport article, plane or helicopter part, space ship or rocket part, photovoltaic module part, wind turbine part, furniture part, construction or building part, telephone or cellphone part, computer or television part, printer or photocopier part.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1159553
- WO 2013056845 A
- FR 1256929
- WO 2014013028 A
- JP 2000119421 A